# EUROPEAN PATENT APPLICATION

(11) **EP 2 563 085 A1**
(43) Date of publication of application: **27.02.2013**
(21) Application number: 11771699.3
(22) Date of filing: 18.02.2011
(51) Int. Cl.: H04W 72/12, H04W 72/14

(54) **BASE STATION APPARATUS AND SCHEDULING METHOD**

(30) Priority: 20.04.2010 JP 2010097024
(71) Applicant: Panasonic Corporation, Kadoma-shi Osaka 571-8501 (JP)
(72) Inventor: ARIMA, Takenobu, Chuo-ku Osaka 540-6207 (JP)
(74) Representative: Grünecker, Kinkeldey, Stockmair & Schwanhäusser
(86) International application number: PCT/JP2011/000915
(87) International publication number: WO 2011/132354

(57) **Abstract**

This invention relates to a base station apparatus (eNB) capable of reducing the data processing delay (U-plane latency) by more amount than an LTE system during a semi-persistent scheduling. In an eNB (100), which is operative to perform a semi-persistent scheduling for a UE, a scheduler (102) performs, in accordance with the service type of a service to be used by the UE, a scheduling of upstream data to be transmitted by the UE, and a radio processing unit (103) transmits, to the UE, scheduling information indicating a result of the scheduling performed by the scheduler (102). Here, when the UE is to use a service corresponding to a semi-persistent scheduling, the scheduler (102) is triggered, by the establishment of a radio bearer of the service corresponding to the semi-persistent scheduling between the eNB (100) and the UE, to perform the semi-persistent scheduling.

## Description

### Technical Field

The present invention relates to a base station apparatus and a scheduling method.

### Background Art

An LTE (Long Term Evolution) system, which is a next-generation mobile communication system, has been adopted as a standard in 3GPP (3rd Generation Partnership Project). In the LTE system, a plurality of terminal apparatuses (hereinafter, referred to as UE (User Equipment)) use a common channel that is a shared radio resource (physical channel) on each of an uplink and a downlink. Here, a base station apparatus (hereinafter, referred to as eNB (Evolved Node B)) performs scheduling to determine which UE should use which common channel. As the schemes for this scheduling, dynamic scheduling and semi-persistent scheduling have been established as standards in LTE (see for example, Non-Patent Literatures 1 and 2).

User data exchanged between a UE and an eNB in LTE is controlled in layer 1 (the physical layer) and layer 2 (the data link layer) of a communication protocol used in LTE. Layer 2 is divided into three layers: the MAC (Medium Access Control) sublayer, the RLC (Radio Link Control) sublayer, and the PDCP (Packet Data Convergence Protocol) sublayer.

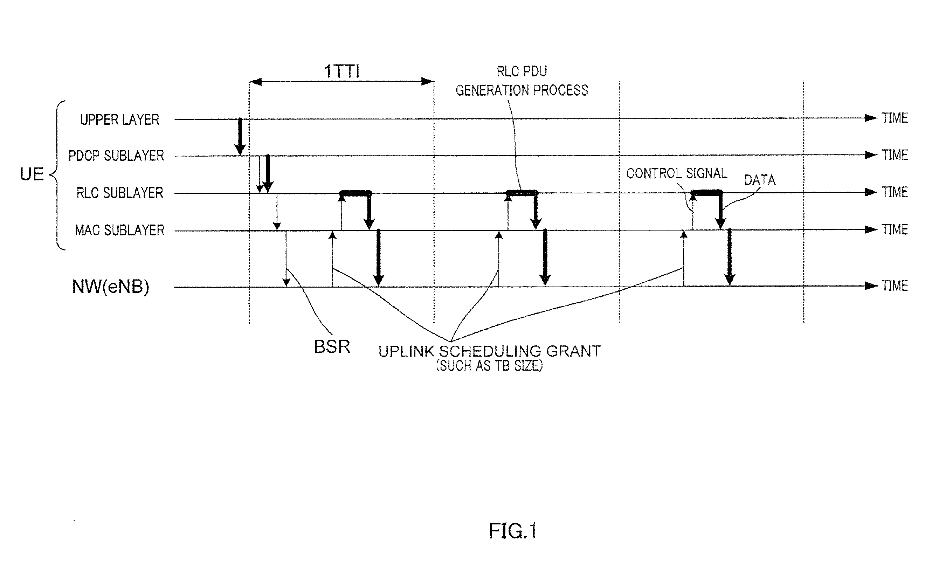

In dynamic scheduling, a UE notifies an eNB on a network (NW) of a control signal (for example, Buffer Status Report (BSR)) indicating the amount of data waiting to be transmitted, transmittable power and the like to as illustrated in FIG.1. The eNB performs scheduling as to which common channel is to be allocated to which UE (that is, as to which UE a transmission opportunity on the uplink is to be given) on the basis of the control signals (BSR) provided from UEs. The eNB then notifies the UE to be provided with the transmission opportunity for the uplink of scheduling information (for example, an uplink scheduling grant) indicating which common channel for the uplink is allocated to the UE as illustrated in FIG.1. The UE identifies a transmittable amount of data (Transport Block Size, hereinafter, referred to as a TB size) from the scheduling information and generates data packets based on the TB size. The UE then transmits the data packets (uplink data) to the eNB.

In this process, the uplink scheduling grant is exchanged between the MAC sublayers of the eNB and the UE, and the data packets to be transmitted to the eNB are generated in the MAC sublayer of the UE. In practice, however, the UE needs to perform a process (RLC PDU generation process in FIG.1) for adding a header of RLC PDU (Radio Link Control Protocol Data Unit) according to the amount of transmission data to a data packet input from an upper layer as illustrated in FIG.1. That is, the transmission process of transmission data (uplink data) takes place in the RLC sublayer as well as the MAC sublayer in the UE after reception of the uplink scheduling grant.

In dynamic scheduling, a UE needs to receive an uplink scheduling grant (or allocation information for the downlink) in every transmission time unit (for example, in every transmission time interval (TTI)) in which a data packet is transmitted as illustrated in FIG.1. That is, the UE needs to receive an uplink scheduling grant before performing the transmission process of a data packet at every transmission timing of a data packet. Accordingly, in a service such as a voice service where some constant amount of data packets are transmitted and received at constant timings, dynamic scheduling is inefficient because a scheduling process takes place between an eNB and a UE every time data packets are transmitted and received.

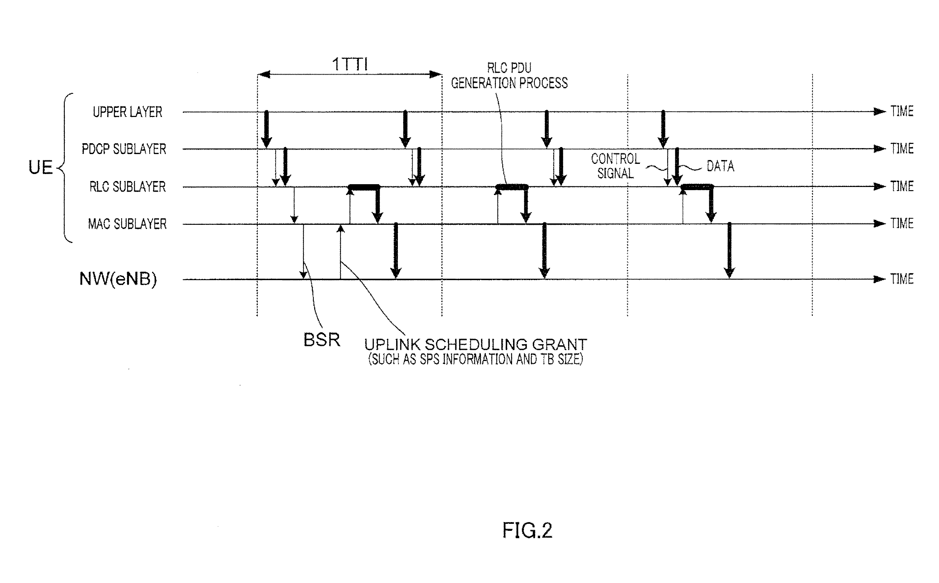

To avoid this, semi-persistent scheduling has been adopted as a standard for scheduling for voice services in LTE. In semi-persistent scheduling, an eNB notifies a UE of a TB size or the like and information concerning semi-persistent scheduling (hereinafter, referred to as SPS information) including information such as information about a common channel allocated to the UE to be provided with a transmission opportunity for the uplink, and transmission periods as scheduling information (an uplink Scheduling grant) as illustrated in FIG.2. Once the negotiation for semi-persistent scheduling is successfully completed with the uplink scheduling grant, the UE continuously uses the radio resources for a certain period of time (in multiple TTIs) based on the SPS information without any additional uplink scheduling grant as illustrated in FIG.2. That is, the eNB allocates (performs scheduling) the radio resources to the UE at every certain period in semi-persistent scheduling.

An LTE-Advanced system, which is an advanced version of the LTE system, requires further reduction in latency (U-plane latency) for processing user data (U-plane) compared with the LTE system (for example, see NPL 3).

### Citation List

### Non-Patent Literatures

NPL 1 3GPP TS 36.300 V9.2.0 (2009-12)
NPL 2 3GPP TS 36.321 V9.1.0 (2009-12)
NPL 3 3GPP TS 36.913 V9.0.0 (2009-12)

### Summary of Invention

### Technical Problem

Timings of negotiations for semi-persistent scheduling are not specified in the LTE systems disclosed in NPLs 1 and 2. For this reason, a negotiation for semi-persistent scheduling can occur after a certain period of time has elapsed since the start of a voice service. During the initial transmission of data packets from a UE, there can be U-plane latency before a negotiation for semi-persistent scheduling is successfully completed in this case. Note that while a negotiation is performed after notification of a BSR is received from the UE in FIG.2 as in dynamic scheduling, U-plane latency occurs in this case as well.

Here, real time processing is required in voice services. Accordingly, in semi-persistent scheduling, which is scheduling intended for voice services in which radio resources are statically allocated for a certain continuous period of time, it is especially desirable to reduce U-plane latency further compared with the U-plane latency in an LTE system.

However, the LTE systems disclosed in NPLs 1 and 2 have a problem that U-plane latency is more likely to occur during initial transmission in the semi-persistent scheduling as described above.

An object of the present invention is to provide a base station apparatus and a scheduling method capable of reducing U-plane latency in semi-persistent scheduling below U-plane latency in an LTE system.

### Solution to Problem

A base station apparatus reflecting a first aspect of the present invention is configured to perform semi-persistent scheduling for a terminal apparatus, the base station apparatus including: a scheduler that performs scheduling for uplink data in accordance with the type of service used by the terminal apparatus, the uplink data being transmitted by the terminal apparatus; and a transmitting section that transmits scheduling information indicating a result of the scheduling by the scheduler to the terminal apparatus, wherein, when the terminal apparatus uses a service corresponding to semi-persistent scheduling, the scheduler performs semi-persistent scheduling in response to establishment of a radio bearer for the service corresponding to semi-persistent scheduling between the base station apparatus and the terminal apparatus as a trigger.

A scheduling method reflecting a second aspect of the present invention is configured to be used in a base station apparatus that performs semi-persistent scheduling for a terminal apparatus, the scheduling method including: a scheduling step of performing, by the base station apparatus, scheduling for uplink data in accordance with the type of service used by the terminal apparatus, the uplink data being transmitted by the terminal apparatus; and a transmitting step of transmitting, by the base station apparatus, scheduling information indicating a result of the scheduling in the scheduling step to the terminal apparatus, wherein, when the terminal apparatus uses a service corresponding to semi-persistent scheduling, in the scheduling step, semi-persistent scheduling is performed in response to establishment of a radio bearer for the service corresponding to semi-persistent scheduling between the base station apparatus and the terminal apparatus as a trigger.

### Advantageous Effect of Invention

The present invention can reduce U-plane latency in semi-persistent scheduling below U-plane latency in an LTE system.

### Brief Description of Drawings

FIG.1 is a diagram illustrating a dynamic scheduling process;
FIG.2 is a diagram illustrating a semi-persistent scheduling process;
FIG.3 is a diagram illustrating communication protocol stacks according to embodiments;
FIG.4 is a block diagram illustrating a configuration of an eNB according to Embodiment 1 of the present invention;
FIG.5 is a block diagram illustrating a configuration of a UE according to Embodiment 1 of the present invention;
FIG.6 is a diagram illustrating a semi-persistent scheduling process according to Embodiment 1 of the present invention;
FIG.7 is a diagram illustrating data exchange in communication protocol stacks according to Embodiment 1 of the present invention; and
FIG.8 is a diagram illustrating a semi-persistent scheduling process according to Embodiment 2 of the present invention.

### Description of Embodiments

Embodiments of the present invention will be described below in detail with reference to the accompanying drawings.

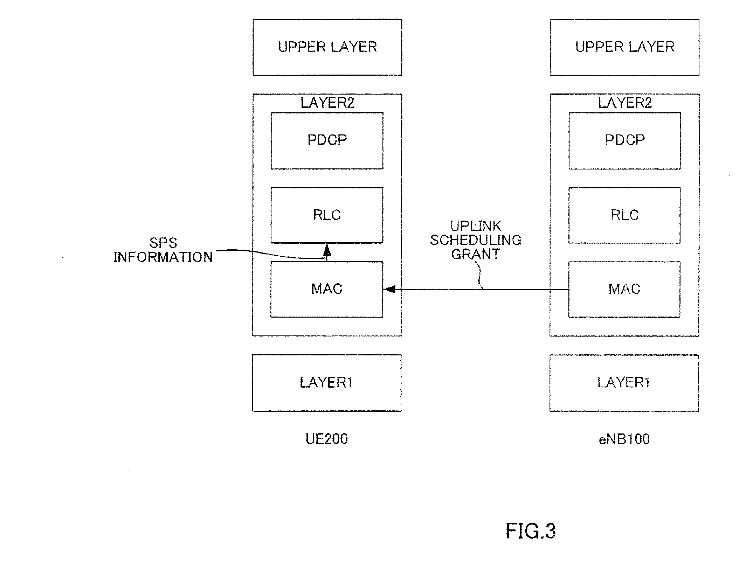

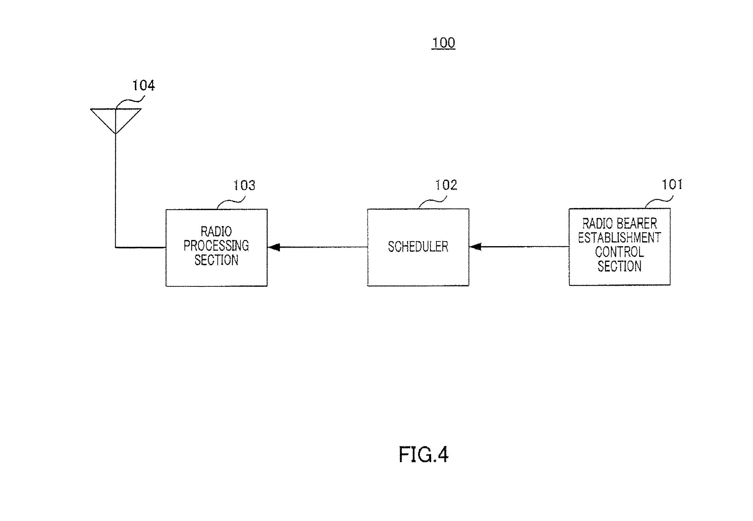

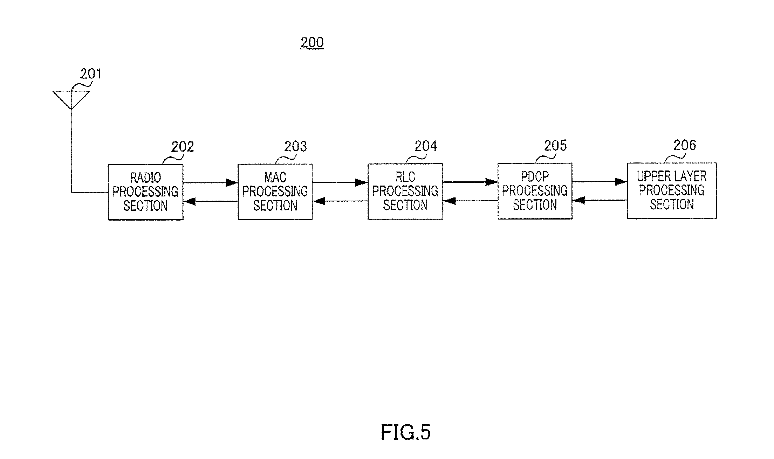

In a communication system according to the embodiments of the present invention, communication protocol stacks illustrated in FIG.3 are used. Specifically, each of the communication protocol stacks at eNB 100 (FIG.4) and UE 200 (FIG.5), both to be described later, includes layer 1 (the physical layer), layer 2 (the data link layer), and a layer (the upper layer) higher than layer 2 as illustrated in FIG.3. Layer 2 includes a MAC sublayer, an RLC sublayer and a PDCP sublayer. In the following description, processes performed in layer 2 (the MAC sublayer, RLC sublayer and PDCP sublayer) closely relating to the present invention will be primarily described.

In the system according to the embodiments of the present invention, eNB 100 (FIG.4) performs one of dynamic scheduling and semi-persistent scheduling for UE 200 (FIG.5). For UE 200 that uses voice services, for example, eNB 100 performs semi-persistent scheduling, which is a scheduling scheme intended for voice services. As illustrated in FIG.3, eNB 100 transmits scheduling information in the MAC sublayer and UE 200 receives the scheduling information from eNB 100 in the MAC sublayer.

### (Embodiment 1)

A configuration of eNB 100 according to Embodiment 1 is illustrated in FIG.4. A scheduling process performed at eNB 100 for data transmitted from UE 200 (FIG.5) (uplink data) will be primarily described below.

In eNB 100 in FIG.4, radio bearer establishment control section 101 controls establishment of a radio bearer between eNB 100 and UE 200. Specifically, UE 200 issues a request to initiate a certain service (service request) to the network (to eNB 100) and thereby requests establishment of a radio bearer for the service. Then, radio bearer establishment control section 101 controls establishment of a radio bearer between eNB 100 and UE 200 on the basis of the service request from UE 200. When the radio bearer between eNB 100 and UE 200 is successfully established, radio bearer establishment control section 101 outputs information indicating that the radio bearer has been successfully established to scheduler 102.

Scheduler 102 allocates (schedules) a radio resource (for example a common channel) to UE 200 on the basis of information concerning the establishment of the radio bearer input from radio bearer establishment control section 101. Specifically, scheduler 102 allocates (schedules) a radio resource to data transmitted from UE 200 (uplink data), in accordance with the type of service corresponding to the established radio bearer (that is, the service used by UE 200).

For example, when a radio bearer for a service corresponding to dynamic scheduling is established between eNB 100 and UE 200, scheduler 102 allocates (performs scheduling) a radio resource to data to be transmitted by UE 200 (uplink data) on the basis of a BSR provided from UE 200 as in FIG.1. Scheduler 102 then provides an uplink scheduling grant indicating a TB size and the like to radio processing section 103 as a result of the scheduling.

Meanwhile, when a radio bearer for a service (for example, a voice service) corresponding to semi-persistent scheduling is established between eNB 100 and UE 200, scheduler 102 allocates (performs scheduling) a radio resource to data to be transmitted from UE 200 (uplink data) in response to an input of information indicating the establishment of the radio bearer from radio bearer establishment control section 101. That is, when a radio bearer for a service corresponding to semi-persistent scheduling is established between eNB 100 and UE 200, scheduler 102 performs scheduling for uplink data from UE 200 without receiving a BSR (the BSR illustrated in FIG.2) from UE 200. Specifically, when UE 200 uses a service corresponding to semi-persistent scheduling, scheduler 102 performs a negotiation for semi-persistent scheduling in response to the establishment of a radio bearer for the service (voice service) corresponding to semi-persistent scheduling between eNB and UE 200 as a trigger. Scheduler 102 then outputs information concerning semi-persistent scheduling such as transmission periods and a semi-persistent scheduling C-RNTI (Cell-Radio Network Temporary Identifier) and an uplink scheduling grant (scheduling information) including information indicating a TB size to radio processing section 103 as results of the scheduling. Accordingly, scheduler 102 can start communication according to semi-persistent scheduling earlier than the timing in the conventional technique illustrated in FIG.2.

Radio processing section 103 applies a radio transmission process such as up-conversion to a control signal such as an uplink scheduling grant input from scheduler 102 and transmits the signal subjected to the radio transmission process to a UE through antenna 104. Radio processing section 103 also receives data from the UE (uplink data) or a control signal (for example, a BSR) through antenna 104 and applies a radio reception process such as down-conversion to the received signal.

In this way, in response to the establishment of a radio bearer for a service corresponding to semi-persistent scheduling as a trigger, eNB 100 notifies UE 200 of an uplink scheduling grant including SPS information.

Note that eNB 100 also allocates a radio resource for the downlink in addition to the radio resource for the uplink. Specifically, scheduler 102 of eNB 100 allocates (performs scheduling) a radio source to data directed to UE 200 (downlink data) on the basis of a control signal (for example, measurement information) from UE 200. Scheduler 102 then provides scheduling information (for example, a downlink assignment) which is a result of the scheduling to radio processing section 103. Radio processing section 103 then transmits the data directed to UE 200 (downlink data) or allocation information to UE 200.

Note that a radio bearer establishment message for a service corresponding to semi-persistent scheduling for the downlink may contain a configuration of the semi-persistent scheduling. Alternatively, reconfiguration of semi-persistent scheduling may be performed after establishment of a radio bearer for a service corresponding to the semi-persistent scheduling for the downlink.

A configuration of a UE according to this embodiment is illustrated in FIG.5. UE 200 notifies the network (to eNB 100) of a service request for a service (such as a voice service) to be performed on UE 200 and thereby requests establishment of a radio bearer for transmitting and receiving data.

In UE 200 illustrated in FIG.5, radio processing section 202 applies a radio reception process such as down-conversion to a control signal such as an uplink scheduling grant received through antenna 201 and outputs the uplink scheduling grant subjected to the radio reception process to MAC processing section 203. Radio processing section 202 also applies a radio transmission process such as up-conversion to data (uplink data) input from MAC processing section 203 and transmits the data subjected to the radio transmission process to eNB 100 (FIG.4) through antenna 201.

MAC processing section 203 applies a transmission process (a MAC process) in the MAC sublayer to data (uplink data) input from RLC processing section 204 and outputs the data subjected to the MAC process to radio processing section 202. Here, at the transmission timing of the uplink data based on an uplink scheduling grant (scheduling information) input from radio processing section 202, MAC processing section 203 instructs RLC processing section 204 to output the uplink data, thereby obtaining data (uplink data subjected to an RLC process) from RLC processing section 204. Furthermore, if an uplink scheduling grant input from radio processing section 202 contains SPS information (that is, when semi-persistent scheduling is performed), MAC processing section 203 outputs the uplink scheduling grant (scheduling information) including the SPS information to RLC processing section 204.

RLC processing section 204 performs a transmission process (an RLC process, for example, an RLC PDU generation process) in the RLC sublayer, which is higher than the MAC sublayer, for data (uplink data) input from PDCP processing section 205.

Here, when an uplink scheduling grant including SPS information is input from MAC processing section 203, RLC processing section 204 performs the RLC PDU generation process for uplink data input from PDCP processing section 205, regardless of an instruction from MAC processing section 203. Specifically, RLC processing section 204 performs the RLC process for the uplink data (transmission process for the uplink data) in the time period between the input of the uplink data from the PDCP sublayer (that is, PDCP processing section 205), which is higher than the RLC sublayer, and the reception of an instruction to output the uplink data from MAC processing section 203. For example, RLC processing section 204 may perform the RLC process at the time when uplink data is input from PDCP processing section 205 (that is, the time when the RLC process becomes executable) after an uplink scheduling grant including SPS information is input from MAC processing section 203. In practice, the amount of data from the upper layer may be below the transmittable data size (TB size) at a certain transmission timing. In this case, RLC processing section 204 generates a data packet smaller than the transmittable data size.

RLC processing section 204 outputs the uplink data subjected to the RLC process to MAC processing section 203 in accordance with an instruction that requests output of the uplink data issued from MAC processing section 203.

PDCP processing section 205 performs a transmission process (a PDCP process) in the PDCP sublayer for data input from upper layer processing section 206 (uplink data) and outputs the data subjected to the PDCP process to RLC processing section 204.

Upper layer processing section 206 performs a process (an upper layer process) in the upper layer such as an application for uplink data and outputs the data subjected to the upper layer process to PDCP processing section 205.

UE 200 performs a reception process for downlink in addition to a transmission process for uplink described above. Specifically, radio processing section 202 of UE 200 illustrated in FIG.5 receives data (downlink data) from eNB 100 and outputs the received data to MAC processing section 203. When dynamic scheduling is performed, radio processing section 202 transmits a control signal (for example, a BSR) to eNB 100. MAC processing section 203 performs a MAC process for data (downlink data) input from the radio processing section 202 and outputs the data subjected to the MAC process to RLC processing section 204. RLC processing section 204 performs an RLC process for data (downlink data) input from MAC processing section 203 and outputs the data subjected to the RLC process to PDCP processing section 205. PDCP processing section 205 performs a PDCP process for data (downlink data) input from RLC processing section 204 and outputs the data subjected to the PDCP process to upper layer processing section 206. Upper layer processing section 206 performs an upper layer process for downlink data input from PDCP processing section 205.

Details of processes performed at eNB 100 (FIG.4) and UE 200 (FIG.5) in semi-persistent scheduling will be described below.

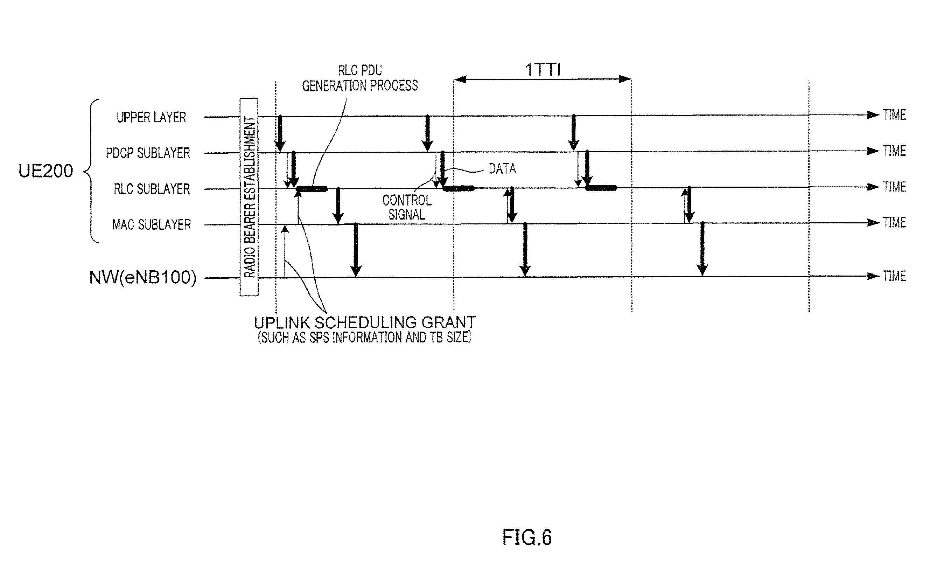

As illustrated in FIG.6, radio bearer establishment control section 101 of eNB 100 establishes a radio bearer for a service corresponding to semi - persistent scheduling between eNB 100 and UE 200.

Then, when information indicating that the radio bearer has been established is input from radio bearer establishment control section 101, scheduler 102 of eNB 100 performs scheduling for uplink data transmitted from UE 200. Scheduler 102 generates an uplink scheduling grant including SPS information, a TB size and the like as a result of the scheduling. Then, eNB 100 notifies UE 200 of the generated uplink scheduling grant as illustrated in FIG.6. That is, in response to the establishment of the radio bearer for a service corresponding to semi-persistent scheduling between eNB 100 and UE 200 as a trigger, eNB 100 performs a negotiation for the semi-persistent scheduling and transmits the uplink scheduling grant which is a result of the scheduling to UE 200 as illustrated in FIG.6.

When receiving the uplink scheduling grant from eNB 100, MAC processing section 203 of UE 200 instructs RLC processing section 204 to output data (uplink data). According to the instruction from MAC processing section 203, RLC processing section 204 performs an RLC PDU generation process for uplink data input from PDCP processing section 205 and outputs the uplink data subjected to the RLC PDU generation process to MAC processing section 203. Then, MAC processing section 203 performs a MAC process for the uplink data input from RLC processing section 204.

Here, FIG.2 (conventional semi-persistent scheduling) and FIG.6 (semi-persistent scheduling according to this embodiment) will be compared. In FIG.2, an eNB receives a BSR from a UE, then performs a negotiation for semi-persistent scheduling, and transmits an uplink scheduling grant which is a result of the scheduling to the UE. That is, the eNB illustrated in FIG.2 performs semi-persistent scheduling for the UE in response to the reception of a BSR from the UE as a trigger. In contrast to this, when a radio bearer between eNB 100 and UE 200 is established, eNB 100 in FIG.6 performs semi-persistent scheduling and transmits an uplink scheduling grant to UE 200 without receiving a BSR from UE. That is, eNB 100 (scheduler 102) performs semi-persistent scheduling for UE 200 in response to the establishment of a radio bearer for service corresponding to semi-persistent scheduling as a trigger. In other words, eNB 100 is configured to perform a negotiation for semi-persistent scheduling immediately after the establishment of a radio bearer regardless of whether or not the UE actually desires to perform communication according to semi-persistent scheduling. Note that information used for establishing the radio bearer can be used in the negotiation.

Thus, eNB 100 illustrated in FIG.6 can reduce the time between the establishment of a radio bearer and transmission of an uplink scheduling grant to UE 200 compared with the eNB illustrated in FIG.2. That is, the time between the establishment of a radio bearer (the start of the service) and the successful completion of a negotiation for semi-persistent scheduling can be reduced in FIG.6 compared with that in FIG.2. Accordingly, UE 200 illustrated in FIG.6 can reduce the time between the establishment of a radio bearer and the initial transmission of uplink data compared with the UE illustrated in FIG.2. That is, the latency in the initial transmission of data in FIG.6 can be lower than the latency in FIG.2. Semi-persistent scheduling has more stringent latency requirements in the initial transmission than dynamic scheduling because the semi-persistent scheduling is primarily designed for exchange of data such as voice data. Therefore, preparing for communications in semi-persistent scheduling as in this embodiment offers a significant advantage in the practical use of semi-persistent scheduling.

In FIG.6, if an uplink scheduling grant from eNB 100 includes SPS information, MAC processing section 203 of UE 200 outputs the uplink scheduling grant including the SPS information and a TB size and the like to RLC processing section 204. That is, as illustrated in FIG.3, scheduling information (an uplink scheduling grant) is exchanged between the MAC sublayers of eNB 100 and UE 200, and in addition, SPS information is notified from the MAC sublayer to the RLC sublayer in UE 200.

With this, RLC processing section 204 (the RLC sublayer) recognizes that eNB 100 is going to perform semi-persistent scheduling for UE 200. That is, RLC processing section 204 recognizes the data transmission periods, the TB size and the like in semi-persistent scheduling. Here, when the size of data input from PDCP processing section 205 and the TB size included in the uplink scheduling grant are made known to RLC processing section 204, RLC processing section 204 can perform the RLC PDU generation process. Accordingly, when uplink data is input from PDCP processing unit 205 after input of the SPS information, RLC processing section 204 can perform the RLC process for the uplink data. Therefore, RLC processing section 204 performs the RLC process for the uplink data before an instruction to output uplink data is input from MAC processing section 203. Specifically, RLC processing section 204 can perform the RLC process for uplink data in the time period between the input of the uplink data from PDCP processing section 205 and the issuance of an instruction to output the uplink data from MAC processing section 203. For example, in FIG.6, RLC processing section 204 starts the RLC PDU generation process at the time when uplink data is input from PDCP processing section 205.

In FIG.6, when RLC processing section 204 is instructed to output uplink data (by means of a control signal illustrated in FIG.6), RLC processing section 204 outputs uplink data already subjected to the RLC PDU generation process to MAC processing section 203. That is, RLC processing section 204 starts the RLC process for the uplink data without synchronizing to the transmission timing of the uplink data (the instruction to output uplink data from MAC processing section 203) as illustrated in FIG.6. In other words, RLC processing section 204 performs the RLC process for the uplink data regardless of the transmission timing of the uplink data (TTI in which the uplink data is transmitted).

The reason for performing the process described above will be described below. As illustrated in FIGS.1 and 2, in LTE, an eNB and a UE exchange scheduling information (an uplink scheduling grant) in the MAC sublayer of layer 2. Also as illustrated in FIGS.1 and 2, at the transmission timing of a data packet (uplink data), the UE starts a transmission process (the RLC PDU generation process illustrated in FIGS.1 and 2) in the RLC sublayer in accordance with an instruction requesting output of data packets from the MAC sublayer (the instruction by means of the control signal illustrated in FIGS. and 2). That is, the transmission process is performed in the RLC sublayer in the UE without recognizing a scheduling scheme (dynamic scheduling or semi-persistent scheduling). In other words, in spite of the fact that a transmission timing in a fixed period of time is set in semi-persistent scheduling (that is, in spite of the fact that actually there is an adequate time for performing a transmission process before the transmission timing in the RLC sublayer), the transmission process is not performed until the transmission timing in the RLC sublayer. Accordingly, it is difficult to further reduce U-plane latency in the RLC sublayer.

In contrast to this, UE 200 can reduce the time between the issuance of an instruction (control signal) to output uplink data from the MAC sublayer (MAC processing section 203) to the RLC sublayer (RLC processing section 204) and the output of the uplink data (data packets) from the RLC sublayer (RLC processing section 204) to the MAC sublayer (MAC processing section 203) as illustrated in FIG.6 compared with the UE illustrated in FIG.2. Specifically, when an instruction (a control signal) to output uplink data is output from the MAC sublayer to the RLC sublayer in the UE illustrated in FIG.2, an RLC PDU generation process is performed in the RLC sublayer, and the uplink data subjected to the RLC PDU generation process is provided to the MAC sublayer. Meanwhile, in UE 200 illustrated in FIG.6, an RLC PDU generation process of uplink data is performed in advance and therefore the uplink data subjected to the RLC PDU generation process is output to the MAC sublayer immediately after the issuance of the instruction (control signal) to output the uplink data from the MAC sublayer to the RLC sublayer. In this way, U-plane latency in the RLC sublayer in FIG.6 can be reduced compared with that in FIG.2. Since semi-persistent scheduling is designed primarily for data that has stringent latency requirements such as voice data as has been described above, reduction in the latency in the RLC sublayer offers a significant advantage in the practical use of semi-persistent scheduling.

To avoid the latency associated with the RLC process, RLC processing section 204 needs only to complete the RLC process in the time period between the time RLC processing section 204 has received the uplink data from the upper sublayer and the time when MAC processing section 203 will issue the instruction to output the uplink data subjected to the RLC process. Therefore, RLC processing section 204 can set any timing for performing an RLC process within that time period.

In this way, when UE 200 in the communication system according to this embodiment uses a service (for example, a voice service) corresponding to semi-persistent scheduling, eNB 100 (scheduler 102) performs semi-persistent scheduling for uplink data from UE 200 in response to the establishment of a radio bearer for the service corresponding to semi-persistent scheduling as a trigger, and notifies UE 200 of an uplink scheduling grant which is a result of the scheduling. That is, eNB 100 can initiate semi-persistent scheduling regardless of a report from UE 200 (for example, a BSR). Thus, for the uplink, the communication system can reduce the latency in the initial transmission of uplink data transmitted from UE 200 compared with an LTE system (for example, the LTE system in FIG.2). That is, reduction in the occurrence of U-plane latency in the initial transmission in semi-persistent scheduling can reduce U-plane latency compared with that in an LTE system (for example the LTE system FIG.2).

In the communication system according to this embodiment, when scheduling information (an uplink scheduling grant) received in the MAC sublayer from eNB 100 includes SPS information, UE 200 (MAC processing section 203) also notifies the RLC sublayer of the scheduling information including the SPS information. This enables the RLC sublayer of UE 200 to recognize that the semi-persistent scheduling is performed and to start the RLC process regardless of the transmission timing of uplink data. This offers flexibility to the RLC sublayer in timing of performing uplink data transmission process. Accordingly, the possibility is increased that the RLC process in the RLC sublayer of UE 200 is completed at the time an instruction to output uplink data is issued from the MAC sublayer after SPS information is input from the MAC sublayer. As described above, the improvement in U-plane latency in the RLC sublayer for the uplink in semi-persistent scheduling enables reduction in U-plane latency compared with latency in an LTE system (for example, the system in FIG.2).

Thus, according to the present embodiment, it is possible to reduce U-plane latency during semi-persistent scheduling further below U-plane latency in the LTE system.

While this embodiment has been described primarily with uplink data scheduling, the present invention is applicable to downlink data scheduling as well. Specifically, like UE 200, eNB 100 notifies the RLC sublayer of scheduling information (SPS information) exchanged in the MAC sublayer. This enables eNB 100 to improve U-plane latency in the RLC sublayer and reduce latency of downlink data compared with that in an LTE system as in UE 200 in the embodiment described above.

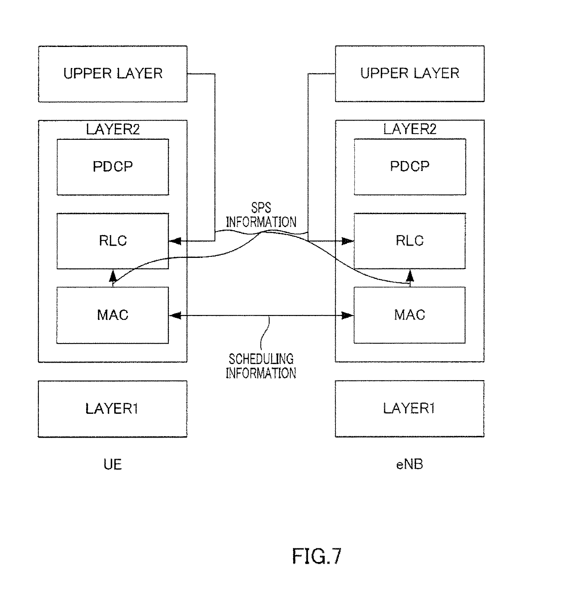

In this embodiment, SPS information is notified from the MAC sublayer to the RLC sublayer. However, the SPS information may be provided from another layer, instead of the MAC sublayer, to the RLC sublayer. For example, the SPS information may be notified from an RRC (Radio Resource Control) layer to the RLC sublayer or from more than one layer (in FIG.7, the upper layers and the MAC layers in the eNB and the UE) to the RLC sublayer.

### (Embodiment 2)

In Embodiment 2, a UE uses the same processor to perform both transmission and reception processes for uplink and downlink data in layer 2.

To prevent increase in the circuit size and power consumption, it is desirable that a UE use the same processor to perform both transmission and reception processes for uplink data and downlink data in layer 2. When a transmission process for uplink data and a reception process for downlink data occur simultaneously at the same time on the UE, usually the transmission process is performed in preference to the reception process because it is important to avoid missing the opportunity of transmission from the UE in consideration of the efficiency of the system as a whole. Accordingly, when a transmission process and a reception process occur simultaneously at the same time, the reception process is possibly delayed.

In this respect, when a transmission process and a reception process occur simultaneously at the same time, the UE according to this embodiment gives precedence to the reception process for downlink data over the transmission process for uplink data while performing a process similar to that in Embodiment 1.

This embodiment will be described below in detail. The processes performed at eNB 100 (FIG.4) and UE 200 (FIG.5) in semi-persistent scheduling will be described below in detail.

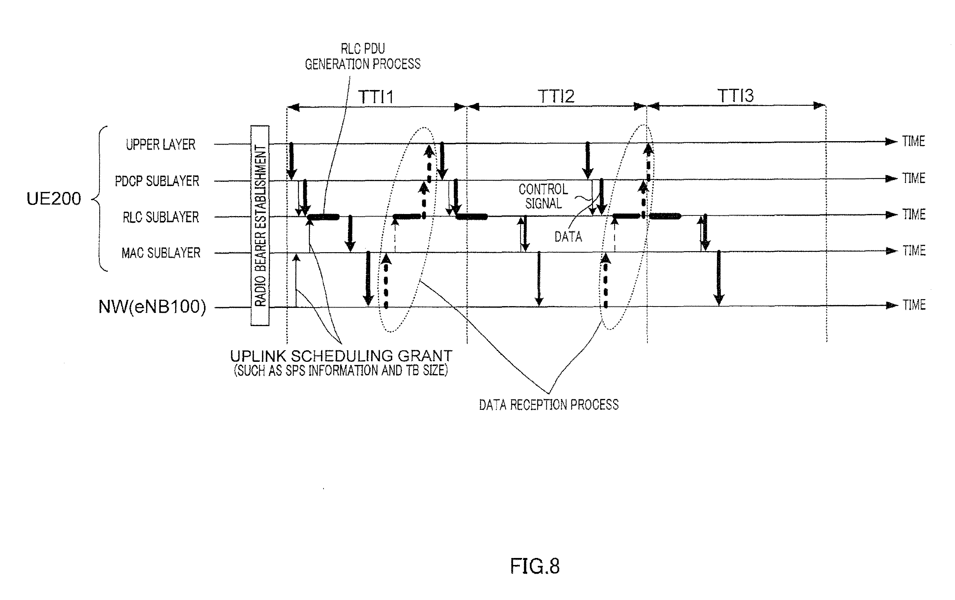

As illustrated in FIG.8, radio bearer establishment control section 101 of eNB 100 establishes a radio bearer for a service corresponding to semi-persistent scheduling between eNB 100 and UE 200 as in Embodiment 1 (FIG.6). As in the case with Embodiment 1, scheduler 102 of eNB 100 performs semi-persistent scheduling in response to the establishment of a radio bearer for a service corresponding to semi-persistent scheduling between eNB 100 and UE 200 as a trigger, and transmits an uplink scheduling grant which is a result of the scheduling to UE 200.

Scheduler 102 performs scheduling for downlink data directed to UE 200 (allocates a common channel for the downlink) on the basis of a control signal (for example, measurement information) from UE 200 (not shown). Scheduler 102 transmits allocation information (for example, a downlink assignment) which is a result of the scheduling to UE 200 (not shown).

Then, as illustrated in FIG.8, upon receipt of an uplink scheduling grant from eNB 100, MAC processing section 203 of UE 200 instructs RLC processing section 204 to output data (uplink data) as in Embodiment 1 (FIG.6). If the uplink scheduling grant from eNB 100 includes SPS information, as in Embodiment 1, MAC processing section 203 outputs the uplink scheduling grant including the SPS information and information such as a TB size to RLC processing section 204. Then, RLC processing section 204 performs an RLC process for uplink data in the time period between the input of the uplink data from PDCP processing section 205 and the issuance of the instruction to output the uplink data from MAC processing section 203, as in Embodiment 1.

Based on the downlink assignment, UE 200 receives downlink data transmitted from eNB 100 (indicated by dashed arrows in FIG.8). UE 200 performs a reception process for downlink data from eNB 100 in each sublayer (MAC sublayer, RLC sublayer, and PDCP sublayer) of layer 2 and in a layer higher than layer 2 as illustrated in FIG.8. For example, UE 200 applies a reception process (the process enclosed in a dashed line in FIG.8) to the downlink data received in TTI1 in FIG.8.

After the reception process for the downlink data received in TTI1 in FIG.8, uplink data is input from the upper layer to the RLC sublayer through the PDCP sublayer. That is, in TTI1 in FIG.8 the transmission process for the uplink data and the reception process for the downlink data do not overlap one another. Accordingly, after the reception process for the downlink data received in TTII in FIG.8, RLC processing section 204 performs the RLC PDU generation process for the uplink data input from the PDCP sublayer regardless of an instruction (a control signal in TTI2 in FIG.8) to output uplink data from MAC processing section 203 as in Embodiment 1. RLC processing section 204 then outputs the uplink data subjected to the PLC PDU generation process to MAC processing section 203 according to an instruction (a control signal) to output the uplink data issued from MAC processing section 203 in TTI2 in FIG.8.

Then, UE 200 receives downlink data (indicated by dashed arrows in FIG.8) transmitted from eNB 100 in TTI2 in FIG.8 as well. However, the downlink data is received almost at the same time as the input of uplink data from the upper layer into the RLC sublayer through the PDCP sublayer in TTI2 in FIG.8. That is, the transmission process for the uplink data overlaps the reception process for the downlink data in TTI2 in FIG.8.

Here, RLC processing section 204 recognizes that semi-persistent scheduling is going to be performed, as in Embodiment 1. Accordingly, RLC processing section 204 can perform the transmission process for uplink data at any timing in the period of time between the input of the uplink data from PDCP processing section 205 in TTI2 in FIG.8 and the time when an instruction to output the uplink data will be issued from MAC processing section 203, as long as the transmission process can be completed within the period of time.

Therefore, RLC processing section 204 performs the reception process of downlink data (the process enclosed in a dashed line in FIG.8) in preference to the transmission process for uplink data (the RLC PDU generation process) in a period of time in which the RLC process can be completed between the input of the uplink data from PDCP processing section 205 in TTI2 in FIG.8 and the issuance of the instruction to output the uplink data from MAC processing section 203 in TTI3. After the completion of the reception process for the downlink data in TTI2, RLC processing section 204 performs the transmission process for the uplink data. That is, RLC processing section 204 delays the start of the process of the uplink data within the allowable period of time and performs the process of the downlink data in preference in the period of time spared by the delaying.

As illustrated in FIG.8, the RLC process for the uplink data has been completed by the time of issuance of the instruction to output the uplink data from MAC processing section 203 in TTI3. That is, RLC processing section 204 avoids missing an opportunity of transmission from UE 200 even if the reception process for downlink data is performed in advance when the transmission process for uplink data can be completed before the transmission timing of the uplink data.

In this way, when scheduling information from eNB 100 includes SPS information (an uplink scheduling grant), UE 200 provides the scheduling information to RLC sublayer 1 as in Embodiment 1. Furthermore, when scheduling information is input in the RLC sublayer, UE 200 starts a transmission process for uplink data in the RLC sublayer in any period of time in which the RLC process can be completed between the input of the uplink data from the PDCP sublayer and the issuance of an instruction to output the uplink data from the MAC sublayer, as in Embodiment 1.

This offers flexibility to the RLC sublayer in timing of performing a transmission process for uplink data, as in Embodiment 1. Thus, when a transmission process and a reception process occur concurrently in UE 200, the transmission process is performed in preference to the reception process in UE 200 as a whole as described above while a reception process can be performed in preference to a transmission process in the RLC sublayer.

That is, UE 200 can use the same processor to perform transmission and reception processes for uplink data and downlink data in layer 2 while avoiding missing an opportunity of transmission from UE 200 and yet reducing latency in the reception process for downlink data.

As in Embodiment 1, the occurrence of latency in the initial transmission of uplink data from UE 200 can be reduced compared with that in an LTE system (for example, the system in FIG.2). Also as in Embodiment 1, the improvement in U-plane latency in the RLC sublayer for the uplink in semi-persistent scheduling enables reduction in U-plane latency in the RLC sublayer compared with that in an LTE system (for example, the system in FIG.2). That is, as in Embodiment 1, U-plane latency can be reduced in this embodiment (FIG.8) compared with that in an LTE system (for example, the system in FIG.2).

In this way, this embodiment can reduce U-plane latency compared with that in an LTE system without increasing the circuit size and power consumption in semi-persistent scheduling when a UE uses the same processor to perform processes for both uplink data and downlink data in layer 2.

A case where transmission process for uplink and a reception process for downlink concurrently occur on a UE has been described in this embodiment. However, when semi-persistent scheduling is performed on both uplink and downlink, an eNB may perform scheduling so that the transmission timing of uplink data and the reception timing of downlink data in a UE do not occur, concurrently. For example, the occurrence of a transmission process and a reception process in a UE at the same time (occurrence of U-Plane latency) can be sufficiently prevented by staggering the transmission process for uplink data and the reception process for downlink data by 1 TTI (for example, 1 TTI = 1 ms) or more. In LTE, the scheduling cycle at an eNB is in the range of 10 ms to 640 ms (see for example 3GPP TS 36.913 V9.1.0). Therefore, an eNB can stagger the transmission timing of uplink data and the reception timing of downlink data in a UE (the transmission timing of downlink data from the eNB) from each other by several milliseconds (several TTIs), which is sufficiently shorter than the scheduling cycle. The transmission timings of uplink data and downlink data are determined on the basis of an uplink scheduling grant and a downlink assignment, respectively. Accordingly, the eNB, which generates uplink scheduling grants and downlink assignments, knows both of the transmission timings of uplink data and downlink data. Therefore, for example, the eNB may set the transmission timing of uplink data and the reception timing of downlink data in a UE in different TTIs (different transmission time units). This can prevent UE 200 from missing an opportunity to transmit data and also can reduce latency in the reception process for downlink data even if UE 200 uses the same processor to perform processes for both of uplink data and downlink data in layer 2, as in the embodiment described above.

Alternatively, a UE may transmit a control signal (new signaling) requesting a change of the transmission/reception timing(s) for uplink and/or downlink to an eNB by taking into account latency in a layer other than layer 2 in the UE. That is, the UE may request the end to schedule a transmission/reception timing that takes into account latency in a layer other than layer 2 in the UE so that the transmission process and the reception process in layer 2 in the UE are not concurrently performed. The eNB may then perform scheduling for the transmission/reception timing at the UE on the basis of the request indicated in the control single transmitted from the UE.
In this case, as in the case of the embodiment described above, UE 200 can avoid missing an opportunity to transmit data and also can reduce latency in the reception process for downlink data even if UE 200 uses the same processor to perform processes for both of uplink data and downlink data in layer 2.

In Embodiments 1 and 2, the RLC process is started at such a timing that the RLC process can be completed by the timing at which the MAC processing section will issue an instruction to output uplink data subjected to the RLC process. However, the timing is not limited to this. The RLC process may be started by the timing at which the MAC processing section will issue an instruction to output uplink data subjected to the RLC process. In that case, there is a concern that the timing of output of the uplink data somewhat delays from the timing of issuance of an instruction from the MAC processing section depending on the timing of the start of the RLC process. Even in this case, however, latency can be reduced compared with that in the conventional configuration in which the RLC process is started after an instruction to output uplink data is issued from the MAC processing section.

The embodiments of the present invention have been described above.

The disclosure in the specification, drawings and abstract contained in Japanese Patent Application No.2010-097024 filed on April 20, 2010 is incorporated herein in its entirety.

### Industrial Applicability

The present invention is useful in communication systems that perform transmission and reception using semi-persistent scheduling.

### Reference Signs List

100 eNB
200 UE
101 Radio bearer establishment control section
102 Scheduler
103, 202 Radio processing section
104, 201 Antenna
203 MAC processing section
204 RLC processing section
205 PDCP processing section
206 Upper layer processing section

## Claims

1. A base station apparatus that performs semi-persistent scheduling for a terminal apparatus, the base station apparatus comprising:
a scheduler that performs scheduling for uplink data in accordance with the type of service used by the terminal apparatus, the uplink data being transmitted by the terminal apparatus; and
a transmitting section that transmits scheduling information indicating a result of the scheduling by the scheduler to the terminal apparatus, wherein,
when the terminal apparatus uses a service corresponding to semi-persistent scheduling, the scheduler performs semi-persistent scheduling in response to establishment of a radio bearer for the service corresponding to semi-persistent scheduling between the base station apparatus and the terminal apparatus as a trigger.

2. The base station apparatus according to claim 1, wherein,
when semi-persistent scheduling is performed for both of an uplink and a downlink, the scheduler sets a transmission timing of the uplink data in the terminal apparatus and a reception timing of downlink data in the terminal apparatus in different transmission time intervals (TTIs).

3. A terminal apparatus comprising:
a receiving section that receives, in a first sublayer, scheduling information transmitted from a base station in the first sublayer;
a second sublayer processing section that performs a transmission process in a second sublayer for uplink data received from an upper sublayer and outputs the uplink data subjected to the transmission process to the first sublayer; and
a first sublayer processing section that instructs the second sublayer to output the uplink data at a transmission timing of the uplink data determined on the basis of the scheduling information and performs a transmission process in the first sublayer for the uplink data input from the second sublayer, wherein,
when the scheduling information includes information concerning semi-persistent scheduling, the first sublayer processing section outputs the scheduling information to the second sublayer processing section, and
when the scheduling information is input from the first sublayer processing section, the second sublayer processing section starts the transmission process in the second sublayer at a timing determined on the basis of the scheduling information, without waiting for an instruction from the first sublayer processing section.

4. The terminal apparatus according to claim 3, wherein,
the second sublayer processing section determines the timing to start the transmission process in the second layer within a period between the input of the uplink data from the upper sublayer and a timing at which the first sublayer processing section issues an instruction to output the uplink data, and
determines, on the basis of the scheduling information, a timing at which the first sublayer processing section issues the instruction to output the uplink data.

5. The terminal apparatus according to claim 4, wherein,
when the second sublayer processing section is requested to perform a process of downlink data after the uplink data is input from the upper sublayer, the second sublayer processing section delays the timing to start a transmission process for the uplink data in the second sublayer within a period between the input of the uplink data from the upper sublayer and a timing at which the first sublayer processing section issues the instruction to output the uplink data, and
the second sublayer processing section performs the process of the downlink data in a period of time spared by the delaying of the timing to start the transmission process in the second sublayer.

6. A scheduling method to be used in a base station apparatus that performs semi-persistent scheduling for a terminal apparatus, the scheduling method comprising:
a scheduling step of performing, by the base station apparatus, scheduling for uplink data in accordance with the type of service used by the terminal apparatus, the uplink data being transmitted by the terminal apparatus; and
a transmitting step of transmitting, by the base station apparatus, scheduling information indicating a result of the scheduling in the scheduling step to the terminal apparatus, wherein,
when the terminal apparatus uses a service corresponding to semi-persistent scheduling, in the scheduling step, semi-persistent scheduling is performed in response to establishment of a radio bearer for the service corresponding to semi-persistent scheduling between the base station apparatus and the terminal apparatus as a trigger.

7. A scheduling method to be used in a terminal apparatus, the scheduling method comprising:
a receiving step of receiving, in a first sublayer, scheduling information transmitted in the first sublayer from a base station apparatus;
a second sublayer processing step of performing a transmission process in a second sublayer for uplink data received from an upper sublayer and outputting the uplink data subjected to the transmission process to the first sublayer; and
a first sublayer processing step of instructing the second sublayer to output the uplink data at a transmission timing of the uplink data determined on the basis of the scheduling information, and performing a transmission process in the first sublayer for the uplink data input from the second sublayer, wherein,
when the scheduling information includes information concerning semi-persistent scheduling, the scheduling information is output to the second sublayer in the first sublayer processing step, and
when the scheduling information is input to the second sublayer, in the second sublayer processing step, the transmission process in the second sublayer is started at a timing determined on the basis of the scheduling information, without waiting for an instruction from the first sublayer.
